# EUROPEAN PATENT APPLICATION

(11) **EP 4 746 166 A1**
(43) Date of publication of application: **20.05.2026**
(21) Application number: 25214871.3
(22) Date of filing: 11.11.2025
(51) Int. Cl.: H01M 50/342

(54) **SECONDARY BATTERY INCLUDING DEGASSING DEVICE AND METHOD OF MANUFACTURING THE SAME**

(30) Priority: 14.11.2024 KR 20240162552
(71) Applicant: SAMSUNG SDI CO., LTD., Yongin-si, Gyeonggi-do 17084 (KR)
(72) Inventor: GWAK, Mina, 17084 Yongin-si, Gyeonggi-do (KR); CHOI, Younggwang, 17084 Yongin-si, Gyeonggi-do (KR); JOE, Yunsang, 17084 Yongin-si, Gyeonggi-do (KR)
(74) Representative: Gulde & Partner

(57) **Abstract**

A secondary battery includes a case in which an electrode assembly is accommodated, a cap plate bonded to the case, and a degassing device in one of the case and the cap plate, the degassing device including a vent plate exposed toward an outside of the case, a bonding portion around the vent plate and bonded to one of the case and the cap plate, a notched portion in the vent plate, the notched portion including a notch defining an outer cutting line of an open portion through the vent plate, and the open portion being partially openable when an event occurs, and a non-notched portion on the vent plate, the non-notched portion not including a notch and connecting the open portion, when partially open, to the vent plate.

## Description

### BACKGROUND

### 1. Field

The present disclosure relates to a degassing device installed in a secondary battery, a secondary battery including the same, and a method of manufacturing the secondary battery.

### 2. Description of the Related Art

Unlike primary batteries that cannot be recharged, secondary batteries are batteries that can be recharged and discharged. A secondary battery mainly includes an electrode assembly including a positive electrode plate, a separator, and a negative electrode plate, a case (or a can) that accommodates the electrode assembly, and a cap assembly including an external terminal that may connect the electrode assembly to an external power source or load.

One of the main causes of fires and explosions in secondary batteries is a flammable gas, and the risk of thermal runaway increases when a plurality of batteries are packed closely together. A secondary battery includes a vent, i.e., a degassing device, for discharging gas generated inside a case. In a degassing device, a notch may be ruptured by pressure of gas, which is generated by overcharging or abnormal operation of a battery, to discharge the gas to the outside, thereby preventing an explosion of the secondary battery.

The degassing device may be installed in a cap assembly or a case. In a cylindrical battery, a degassing device may be located between a cap-up and a subplate as a portion of a cap assembly, and in a prismatic battery, a degassing device may be bonded to a hole formed in a cap plate, or in some cases, bonded to a hole formed in a battery case.

The above information disclosed in this Background section is for enhancement of understanding of the background of the present disclosure, and therefore, it may contain information that does not constitute a related (or prior) art.

### SUMMARY

According to an aspect of the present disclosure, there is provided a secondary battery including a case in which an electrode assembly is accommodated, a cap plate bonded to the case, and a degassing device installed in one of the case and the cap plate. The degassing device may include a vent plate exposed toward the outside of the case, a bonding portion bonded to one of the case and the cap plate, a notched portion in which a notch, which defines an outer cutting line of an open portion through which the vent plate is partially opened when an event occurs, is formed, and a non-notched portion in which a notch is not formed such that the open portion cut and opened along the cutting line when the event occurs is not separated from the vent plate.

According to another aspect of the present disclosure, there is provided a method of manufacturing a secondary battery, the method including forming a gas discharge hole in one of a case and a cap plate, manufacturing a degassing device configured to discharge gas inside the case when an event occurs, and bonding the degassing device to the gas discharge hole, wherein the manufacturing of the degassing includes forming a plate, which is exposed to the outside of the case through the gas discharge hole, and a bonding portion around the plate, providing a notched portion defining an outer cutting line of an open portion through which the vent plate is partially opened when the event occurs, and providing a non-notched portion such that the open portion cut and opened along the outer cutting line when the event occurs is not separated from the vent plate.

### BRIEF DESCRIPTION OF THE DRAWINGS

Features will become apparent to those of skill in the art by describing in detail exemplary embodiments with reference to the attached drawings, in which:
FIG. 1 is a cross-sectional view of a cylindrical secondary battery according to some embodiments of the present disclosure;
FIG. 2 is a top perspective view of a prismatic secondary battery according to some embodiments of the present disclosure;
FIG. 3 is a cross-sectional view along line I-I' of FIG. 2;
FIG. 4 is an exploded perspective view of a prismatic battery according to another embodiment;
FIG. 5 is a schematic view of a degassing device according to some embodiments of the present disclosure.
FIG. 6 is a plan view of a degassing device according to some embodiments of the present disclosure;
FIG. 7 is a cross-sectional view along line Y-Y' of FIG. 6;
FIG. 8 illustrates a state in which a notched portion is cut by gas pressure inside a battery, and an open portion is opened;
FIGS. 9A to 9C illustrate various shapes and areas of an open portion;
FIGS. 10A and 10B illustrate examples in which the notch portion of the open portion is formed asymmetrically with respect to the non-notched portion to change a degassing direction;
FIGS. 11A and 11B illustrate examples in which the notched portion is formed only in a straight line;
FIG. 12 illustrates various examples of degassing devices having a circular outline;
FIGS. 13 and 14 illustrate modified embodiments of FIG. 7;
FIG. 15 is a view of a secondary battery module including secondary batteries manufactured according to embodiments of the present disclosure;
FIG. 16 is an example diagram of a secondary battery pack including the secondary battery module in FIG. 15; and
FIG. 17 illustrates a vehicle with the secondary battery pack of FIG. 16.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art. Further, the terms or words used in the present specification and claims are not to be narrowly interpreted according to their general or dictionary meanings and should be interpreted as having meanings and concepts that are consistent with the technical idea of the present disclosure.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "linked to," "connected to" or "coupled to" another element or layer, it may be directly linked, connected, or coupled to the other element or layer or one or more intervening elements or layers may also be present. When an element or layer is referred to as being "directly linked to," "directly connected to" or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

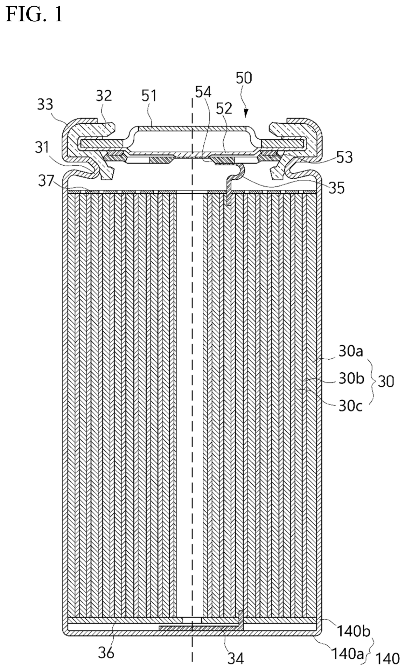

FIG. 1 illustrates a cylindrical secondary battery according to some embodiments of the present disclosure.

Referring to FIG. 1, the secondary battery may include an electrode assembly 30, a case 140 accommodating the electrode assembly 30 and an electrolyte therein, a cap assembly 50 coupled to an opening of the case 140 to seal the case 140, and an insulating plate 37 positioned between the electrode assembly 30 and the cap assembly 50 inside the case 140.

The electrode assembly 30 may include a separator 30b between a first electrode 30c and a second electrode 30a, and may be wound in a jelly-roll shape.

The first electrode 30c may include a first substrate and a first active material layer on the first substrate. A first lead tab 35 may extend outwardly from a first uncoated portion of the first substrate where the first active material layer is not located, and the first lead tab 35 may be electrically connected to the cap assembly 50.

The second electrode 30a may include a second substrate and a second active material layer on the second substrate. A second lead tab 34 may extend outwardly from a second uncoated portion of the second substrate where the second active material layer is not located, and the second lead tab 34 may be electrically connected to the case 140. The first lead tab 35 and the second lead tab 34 may extend in opposite directions.

The first electrode 30c may act as a positive electrode. In such an embodiment, the first substrate may be made of, e.g., an aluminum foil, and the first active material layer may include, e.g., a transition metal oxide. The second electrode 30a may act as a negative electrode. In such an embodiment, the second substrate may be made of, e.g., a copper foil or a nickel foil, and the second active material layer may include, e.g., graphite.

The separator 30b prevents a short circuit between the first electrode and the second electrode while allowing movement of lithium ions therebetween. The separator 30b may be made of, e.g., a polyethylene film, a polypropylene film, a polyethylene-polypropylene film, or the like.

The case 140 may accommodate the electrode assembly 30 and, together with the cap assembly 50, may form the external appearance of the secondary battery. The case 140 may have a substantially cylindrical body portion 140b and a bottom portion 140a connected to one side (e.g., to one end) of the body portion 140b. A beading part 31 (e.g., a bead) deformed inwardly may be formed in the body portion 140b, and a crimping part 33 (e.g., a crimp) bent inwardly may be formed at an open end of the body portion 140b.

As a non-limiting example, the beading part 31 reduces or prevents movement of the electrode assembly 30 inside the case 140 and facilitates seating of a gasket 32 and the cap assembly 50. Advantageously, the crimping part 33 firmly fixes the cap assembly 50 by pressing the edge of the case 140 against the gasket 32. The case 140 may be formed of, e.g., steel plated with nickel.

The cap assembly 50 may be fixed to the inside of the crimping part 33 by the gasket 32 to seal the case 140. The cap assembly 50 may include a cap up 51, a safety vent 52, a cap down 53, an insulating member, and a sub plate 54, but may be modified in various ways.

The cap up 51 may be positioned at the uppermost part of the cap assembly 50. The cap up 51 may include a terminal part that protrudes upwardly and is connected to an external circuit, and an outlet for discharging gas may be arranged around the terminal part.

The safety vent 52 may be located under the cap up 51. The safety vent 52 may include a protrusion part that protrudes convexly downwardly and is connected to the sub plate 54, and at least one notch may be formed in the safety vent 52 around the protrusion part. When gas is generated due to overcharging or abnormal operation of the secondary battery, the protrusion part is deformed upwardly by the pressure and separates from the sub plate 54 while the safety vent 52 is cut (e.g., bursts or tears) along the notch. The cut safety vent 52 may prevent the secondary battery from exploding by allowing for the gas to be discharged to the outside.

The cap down 53 may be below the safety vent 52. The cap down 53 may have a first opening for exposing the protrusion part of the safety vent 52 and a second opening for gas discharge. The insulating member may be positioned between the safety vent 52 and the cap down 53 to insulate the safety vent 52 and the cap down 53.

The sub plate 54 may be under the cap down 53. The sub plate 54 may be fixed to a lower surface of the cap down 53 to block the first opening of the cap down 53, and the protrusion part of the safety vent 53 may be fixed to the sub plate 54. The first lead tab 35, which is drawn out from the electrode assembly 30 may be fixed to the sub plate 54. Accordingly, the cap up 51, the safety vent 52, the cap down 53, and the sub plate 54 may be electrically connected to the first electrode 30c of the electrode assembly 30.

The insulating plate 37 may be positioned to be in contact with the electrode assembly 30 below the beading part 13. The insulating plate 37 may have a tab opening through which the first lead tab 35 is drawn out. The cap assembly 50, which is electrically connected to the first electrode by the first lead tab, may face the electrode assembly with the insulating plate 37 interposed therebetween and may maintain a state of being insulated (e.g., electrically insulated) from the electrode assembly 30 by the insulating plate 37. Meanwhile, another insulating plate 36 may be included for insulation between the electrode assembly 30 and the bottom portion 140a of the case 140.

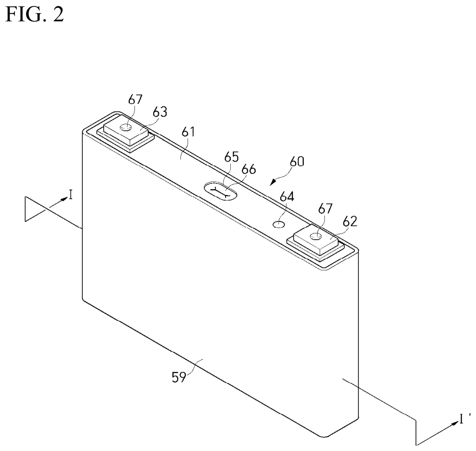

FIG. 2 is a top perspective view of a prismatic secondary battery, according to some embodiments of the present disclosure.

Referring to FIG. 2, a case 59 may define an overall appearance of the prismatic secondary battery, and may be made of a conductive metal, e.g., aluminum, aluminum alloy, or nickel-plated steel. In addition, the case 59 may provide a space for accommodating an electrode assembly therein.

A cap assembly 60 may include a cap plate 61 that covers the opening of the case 51. In some examples, the case 59 and the cap plate 61 may be made of a conductive material. Here, a first terminal 62 and a second terminal 63 may be electrically connected to respective positive and negative (or negative and positive) electrodes inside the case, and may be installed to protrude outward through the cap plate 61.

The cap plate 61 may be equipped with an electrolyte injection port 64 formed to install a sealing plug (or seal pin), and a vent (e.g., a degassing device 66) may be formed in a gas discharging hole 65. The vent may discharge gas generated inside the secondary battery.

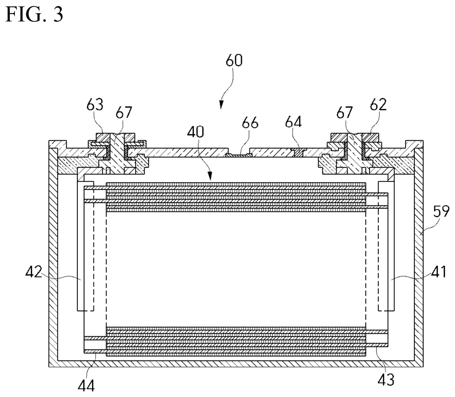

FIG. 3 is a cross-sectional view taken along line I-I' of FIG. 2, according to some embodiments of the present disclosure. With reference to FIG. 3, the internal structure of the prismatic secondary battery and the coupling structure with the cap assembly 60 will be further described.

Referring to FIG. 3, the prismatic secondary battery may include an electrode assembly 40, a first current collector 41, the first terminal 62, a second current collector 42, the second terminal 63, the case 51, and the cap assembly 60.

The electrode assembly 40 may be formed by winding or stacking a stack of a first electrode plate, a separator, and a second electrode plate. For example, when the electrode assembly 40 is a wound stack, a winding axis may be parallel to the longitudinal direction of the case 59. In another example, the electrode assembly 40 may be a stack type rather than a winding type. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case. The first electrode plate of the electrode assembly may act as a negative electrode, and the second electrode plate may act as a positive electrode, e.g., the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator prevents or substantially reduces instances of a short circuit between the first electrode plate and the second electrode plate while allowing movement of lithium ions therebetween. The separator may be made of, for example, a polyethylene film, a polypropylene film, a polyethylene-polypropylene film, or the like.

In some embodiments, the electrode assembly 40 is accommodated in the case 59 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. As mentioned above, in some embodiments in which the first electrode tab 43 and the second electrode tab 44 are located at the top of the electrode assembly 40, the first and second current collectors are located at the top of the electrode assembly 40.

As illustrated in FIG. 3, the first current collector 41 and the second current collector 42 may be connected to the first terminal 62 and the second terminal 63 through connection members 67, respectively. For example, the connection members 67 may each have an outer peripheral surface that is threaded, and may be fastened to the first terminal 62 and the second terminal 63 by screwing. In another example, the connection members 67 may also be coupled to the first terminal 62 and the second terminal 63 by riveting or welding.

As such, the secondary battery illustrated in FIG. 3 may have a side-tab structure in which the electrode assembly 40 is arranged so that the first electrode tab 43 and the second electrode tab 44 are positioned on the right and left sides of the secondary battery. In addition, since the first terminal 62 and the second terminal 63 are positioned on the upper part of the case 59, it falls into the category of a top-terminal structure. That is, the first electrode tab 43 and the second electrode tab 44 of the electrode assembly 40 are positioned on the right and left sides of the electrode assembly 40 within the case 59, and the first current collector 41 and the second current collector 42 are respectively connected thereto, and the first terminal 62 and the second terminal 63 connected to each of the current collectors 41, 42 are installed on the outside of the cap plate 61.

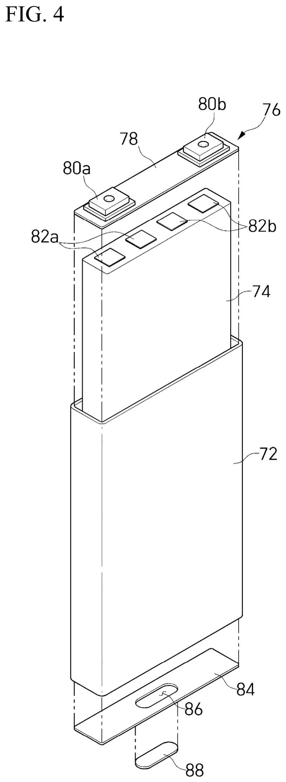

In the cylindrical and prismatic secondary batteries of the types described above with reference to FIGS. 1 to 3, the degassing device for discharging gas is shown as being installed on the cap assembly 50 or 60. However, in some other embodiments, the degassing device may be installed on another cap assembly or case at a location opposite to the cap assembly 50 or 60. A degassing device installed at a location opposite to the cap assembly 50 or 60 as described above, will be described with reference to FIG. 4.

FIG. 4 illustrates an exploded perspective view of a secondary battery according to an embodiment in which a degassing device is located on a surface opposite to the cap assembly (e.g., compared to FIGS. 1-3).

Referring to FIG. 4, an electrode assembly 74 of a jelly roll type or a stack type may be embedded inside a case 72, and a cap assembly 76 may be located in an upper open portion of the case 72. The cap assembly 76 may include a first cap plate 78, a first terminal 80a, and a second terminal 80b.

For example, as illustrated in FIG. 4, a first electrode tab 82a and a second electrode tab 82b may be on an upper surface of the electrode assembly 74 inside the case 72. In another example, a secondary battery may include a side-tab structure (e.g., a so-called side-tab structure) in which electrode tabs are located on both side surfaces.

As illustrated in FIG. 4, a second cap plate 84 may be installed in an open portion of a lower portion of the case 72 (i.e., at a location opposite to the cap assembly 76 or the first cap plate 78). A vent hole for discharging gas, i.e., a gas discharge hole 86, may be formed in the second cap plate 84, and a vent 88 formed to be ruptured by gas inside the case 72 may be attached to the gas discharge hole 86 through welding or the like. In another embodiment, there may be no second cap plate 84, a gas discharge hole may be formed directly in a lower surface of the case 72, and the vent 88 may be bonded to the gas discharge hole.

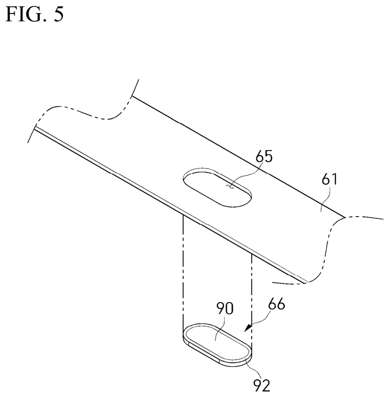

FIG. 5 is a schematic exploded view illustrating a configuration of the degassing device 66 of FIGS. 2-3 according to some embodiments of the present disclosure.

Referring to FIG. 5, the gas discharge hole 65 may be formed in the cap plate 61 (or in a battery case or in a can according to embodiments), and the degassing device 66 may be bonded to the gas discharge hole 65. For example, referring to FIG. 5, the degassing device 66 may be bonded to the gas discharge hole 65 from bottom to top (e.g., the degassing device 66 may be inserted into the gas discharge hole 65 in a direction oriented from the interior of the case 59 toward the cap plate 61). The degassing device 66 may include a vent plate 90 exposed toward the outside of the battery (e.g., facing the exterior of the can 59) through the gas discharge hole 65, and a bonding portion 92 around the vent plate 90. A partial area of the vent plate 90 may be opened by gas pressure in the event of a fire, an explosion, or the like in the battery, thereby serving as a vent. The bonding portion 92 may be bonded to a circumferential periphery of the gas discharge hole 65 of the cap plate 61 through a welding method.

For example, as illustrated in FIG. 5, the vent plate 90 may have a flat plate shape. In another example, the vent plate 90 may have a shape that is convex or concave toward the outside of the battery (e.g., a shape protruding into or out of the case 59). For example, as illustrated in FIG. 5, an overall shape of the degassing device 66 may be oval. For example, a same material as that of the case 59 or the cap plate 61 may be used as a material of the degassing device 66. In another example, an overall shape of the degassing device 66 may be any suitable shape, and the material of the degassing device 66 may be different from that of the case 59 or the cap plate 61.

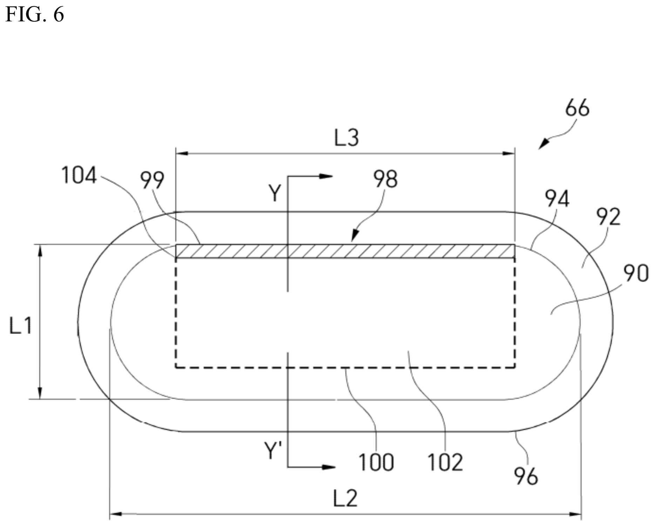

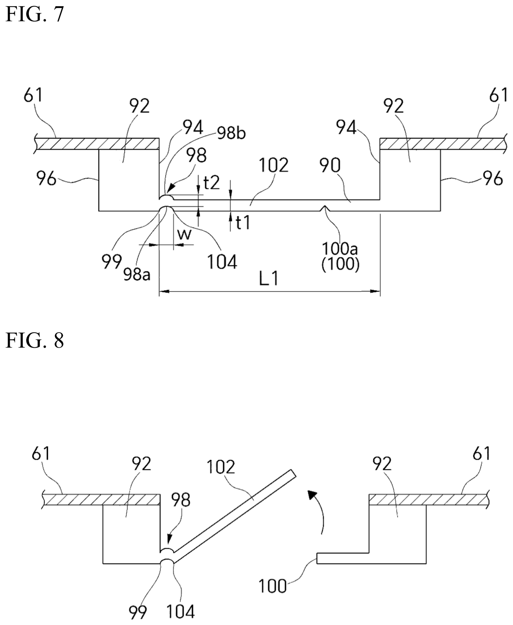

FIG. 6 is a detailed plan view of the degassing device 66 according to some embodiments of the present disclosure. FIG. 7 is a cross-sectional view along line Y-Y' of FIG. 6.

Referring to FIGS. 5-7, the degassing device 66 of the present embodiment may include the vent plate 90 and the bonding portion 92 formed at an outer periphery of the vent plate 90. For example, the vent plate 90 may have an approximate oval shape. For example, referring to FIG. 6, the bonding portion 92 may have an oval shape and may surround an entire perimeter of the vent plate 90, as viewed in a top view. A bonding boundary line 94 indicating a boundary between the vent plate 90 and the bonding portion 92 may be a virtual line or an actual marked line between the vent plate 90 and the bonding portion 92. For example, the bonding boundary line 94 may approximately coincide with an outline of the gas discharge hole 65 (see FIG. 5) of the cap plate 61 (e.g., the bonding boundary line 94 may vertically overlap and have a same shape and size as an outline of the gas discharge hole 65 of the cap plate 61).

A notched portion 100 may be formed to define an outer cutting line of a partial area (i.e., an open portion 102) of the vent plate 90. An area defined by the notched portion 100 is the open portion 102 which is an area that is cut from the vent plate 90 and opened when a battery event occurs. That is, a notch 100a of the notched portion 100 may be formed in a linear shape that is thinner than the vent plate 90 to be ruptured when a pressure of gas generated when an event occurs inside a secondary battery case (e.g., inside case 140 of FIG. 1, case 59 of FIG. 2, or case 72 of FIG. 4) exceeds a certain pressure. For example, referring to FIG. 6, the notched portion 100 may extend along the dashed line in FIG. 6, and may rupture due to its thinness, in response to pressure inside that secondary battery case that exceeds a predetermined threshold.

The open portion 102 defined by the notched portion 100 is not completely opened. That is, the degassing device 66 according to some embodiments of the present disclosure may include a non-notched portion 98 that holds one side of the open portion 102, such that the open portion 102 is not separated (e.g., not completely separated) from the bonding portion 92 even when the notched portion 100 is cut (e.g., as compared to a comparative vent structure that is ruptured and completely opened when a pressure of gas inside a battery exceeds a certain pressure). For example, referring to FIG. 6, the open portion 102 may separate from the vent plate 90 along the notched portion 100, while the non-notched portion 98 may remain attached to the bonding portion 92. Accordingly, the open portion 102 may be opened (e.g., openable) by rotating around the non-notched portion 98. In this way, through a rotational open system of the open portion 102 within an area of the vent plate 90, when a battery event occurs, internal gas may be discharged, while eliminating or completely minimizing external foreign materials from entering the battery case (e.g., as compared to a complete rupture-type vent).

In addition, the open portion 102 may be formed to have various areas and contours within the area of the vent plate 90, thereby securing a freedom of design of a vent suitable for various battery characteristics. That is, as shown in FIG. 6, the outer cutting line of the open portion 102 defined by the notched portion 100 may be variably defined by the notched portion 100 to have various areas and contours within the area of the vent plate 90. In the case of FIG. 6, the open portion 102 is defined to have a length L3 that is less than a length L2 of the vent plate 90 (e.g., the length L2 may be the long axis of the oval-shaped vent plate 90).

As shown in FIG. 6, the non-notched portion 98 may connect one side of the open portion 102 to the bonding boundary line 94 which is a connection portion between the vent plate 90 and the bonding portion 92. To this end, one side of the non-notched portion 98 may be disposed on or adjacent to the bonding boundary line 94, and the notched portion 100 may extend from the other side spaced a certain distance apart from the one side to form the open portion 102. This is shown in detail in FIG. 7.

Referring to FIGS. 6 and 7, the non-notched portion 98 will be first described. The non-notched portion 98 may include a first point 99 connected to the bonding portion 92 through the bonding boundary line 94 and a second point 104 located at a side opposite to the bonding portion 92 to be spaced a preset distance apart from the first point 99. The notched portion 100 may be connected to the second point 104 of the non-notched portion 98, as shown in FIG. 6. A distance between the first point 99 and the second point 104 of the non-notched portion 98, i.e., a width w of the non-notched portion 98, may be within a distance corresponding to 10% of a width length L1 of the vent plate 90 (see FIGS. 6 and 7). Therefore, a starting point of the notched portion 100 defining the open portion 102 may also be within the distance corresponding to 10% of the width length L1 of the vent plate 90 (e.g., the width length L1 may be the short axis of the oval-shaped vent plate 90).

In this way, since the starting point of the notched portion 100 is disposed on or adjacent to the bonding boundary line 94 which is an outermost portion of the vent plate 90, an area of the open portion 102 may be maximized to be similar to an area of the vent plate 90. (On the other hand, in the case of a comparative rupture-type open vent, the entire area of the vent plate is not opened, and only an area in which a rupture line is formed is torn and locally opened.) Thus, the open portion 102 may be designed differently for large-capacity batteries and small-capacity batteries, thereby imparting gas discharge performance optimized for the characteristics of a battery.

As shown in FIG. 7, a groove 98a may be formed in a surface of the vent plate 90 between the first point 99 and the second point 104 of the non-notched portion 98. The groove 98a allows the non-notched portion 98 to serve as a rotation axis when the open portion 102 is opened by gas inside a battery (see FIG. 8 and related description). It is preferable that the groove 98a have a depth that is less than a notch depth of the notched portion 100. This is because the groove 98a should not be ruptured by gas inside a battery. For example, referring to FIG. 7, the groove 98a and the notch 100a may be formed in a lower surface of the vent plate 90 (e.g., in a surface of the vent plate 90 facing the electrode assembly). In another example, the groove and the notch may also be formed in an upper surface of the vent plate 90.

For example, referring to FIG. 7, the notch 100a of the notched portion 100 and the groove 98a of the non-notched portion 98 may be formed in the same surface of the vent plate 90. In another example, the notch of the notched portion 100 and the groove of the non-notched portion 98 may be formed in opposite surfaces.

As shown in FIG. 7, the non-notched portion 98 of the degassing device 66 according to some other embodiments of the present disclosure may additionally include a protrusion 98b formed on a surface of the vent plate 90 opposite to the surface in which the groove 98a is formed. For example, referring to FIG. 7, the protrusion 98b and groove 98a may have a same shape and may vertically overlap each other. When the groove 98a and the protrusion 98b are included together in the non-notched portion 98, the role of the non-notched portion 98 as a rotation axis for the open portion 102 can become clearer. In addition, as shown in FIG. 7, a distance between a groove depth of the groove 98a and a peak of the protrusion 98b, i.e., a thickness t2 of the non-notched portion 98, may be substantially the same as a thickness t1 of the vent plate 90.

In FIGS. 6 and 7, reference numeral 96 denotes an outer outline of the bonding portion 92 of the degassing device 66. For example, referring to FIGS. 6 and 7, a shape of the bonding portion 92 may be an oval shape. For example, an outline of the vent plate 90, i.e., the bonding boundary line 94, may have an oval shape. An outer shape of the vent plate 90 may depend on a shape of the gas discharge hole 65 (see FIG. 5) formed in a counterpart (cap plate or case) to which the degassing device 66 is bonded.

FIG. 8 illustrates a state in which the notched portion 100 is cut by gas pressure inside a battery, and the open portion 102 is opened.

Referring to FIG. 8, as described above, the open portion 102 may be opened like a door using the groove (and the protrusion) between the first point 99 and the second point 104 of the non-notched portion 98 as a rotation axis. Thus, when an event occurs, gas inside the battery may be discharged. Unlike a comparative rupture-type vent, the open portion 102 may serve as a cover to eliminate the possibility of external foreign materials from entering the battery to cause unpredictable side effects.

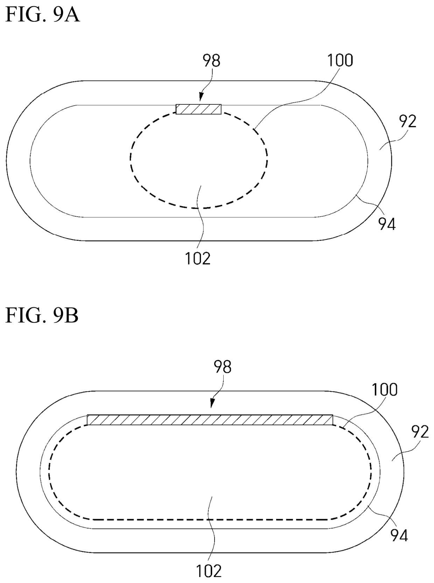

FIGS. 9A to 9C illustrate various shapes and areas of the open portion 102.

For example, referring to FIG. 9A, the open portion 102 may have a relatively small area, and a size of the non-notched portion 98 may have a small size to correspond to the area of the open portion 102. For example, the open portion 102 may have a length that is equal to or less than half a length of the vent plate 90 along the long axis of the oval-shaped vent plate.

For example, referring to FIG. 9B, the open portion 102 may have a maximum area close to an area of the vent plate, and the non-notched portion 98 may extend along a majority or an entirety of a linear portion of a side of the open portion 102. For example, the open portion 102 may overlap a majority of the vent plate.

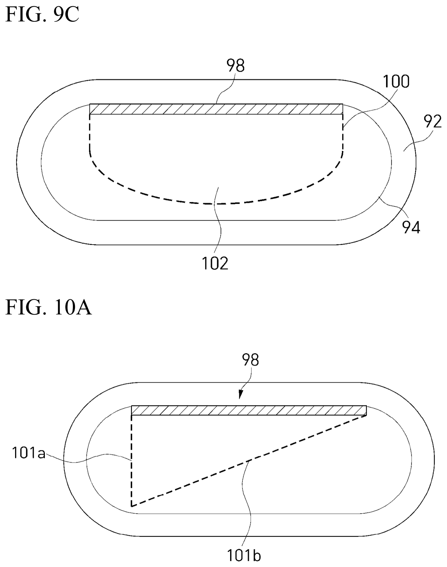

For example, referring to FIG. 9C, a length of the non-notched portion 98 may extend along a majority or an entirety of a linear portion of a side of the open portion 102, and an area of the open portion 102 may have a size smaller than in FIG. 9B and larger than in FIG. 9A.

As in the above examples, the shape and area of the open portion 102 defined by the notched portion 100 and the length of the non-notched portion 98 may be variously designed within the area of the vent plate 90, thereby obtaining an appropriate venting effect according the characteristics of a battery.

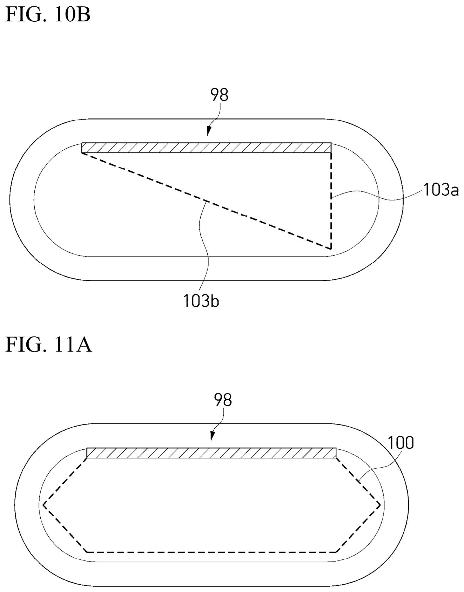

FIGS. 10A and 10B illustrate examples in which the notched portion 100 of the open portion 102 is formed asymmetrically with respect to the non-notched portion 98 to change a degassing direction.

For example, referring to FIG. 10A, a straight line notch 101a vertically connected to a left end of the non-notched portion 98 may not be formed to have a symmetrical shape with respect to a right end of the non-notched portion 98, and instead, a diagonal notch 101b may connect an end of the straight line notch 101a and the right end of the non-notched portion 98. Therefore, in the case of FIG. 10A, degassing may be performed in an approximately ten o'clock direction.

In another example, referring to FIG. 10B, a straight line notch 103a vertically connected to a right end of the non-notched portion 98 may not be formed to form a symmetrical shape with respect to a left end of the non-notched portion 98, and instead, a diagonal notch 103b may connect an end of the straight line notch 103a and the left end of the non-notched portion 98. Therefore, in the case of FIG. 10A, degassing may be performed in an approximately two o'clock direction.

By designing the shape of the open portion 102 in this way (e.g., asymmetrically with respect to a center of the vent plate 90), a degassing direction may be controlled to be oriented in a desired direction.

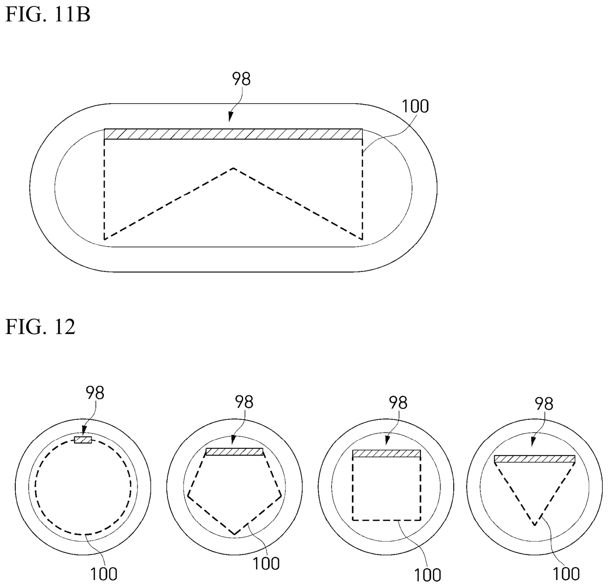

FIGS. 11A and 11B illustrate examples in which the notched portion 100 is formed only in a straight line. In FIGS. 9A and 9B above, the notched portion 100 is formed only in a curve, and in FIG. 9C, a straight line and a curve are formed together. When a notch is formed in a straight line rather than a curve, processability is excellent in terms of equipment or time. FIGS. 11A and 11B illustrate examples in which the notched portion 100 is processed only in a straight line.

FIG. 12 illustrates various examples of degassing devices 66 having various shapes of the open portion 102. For example, the notched portion 100 may have a circular outline (rather than an oval-shaped outline). In other examples, the open portion 102 may have a pentagonal shape, a quadrangular shape, and a triangular shape (shapes listed from left to right in FIG. 12), and may be formed inside a circular vent plate 90. For example, these degassing devices 66 having a circular shape may be manufactured in a small size and thus may be applied to relatively small batteries. In another example, a large number, for example at least ten, of these circular degassing devices 66 may be applied to large batteries to enable degassing for each part (e.g., different parts) of the battery.

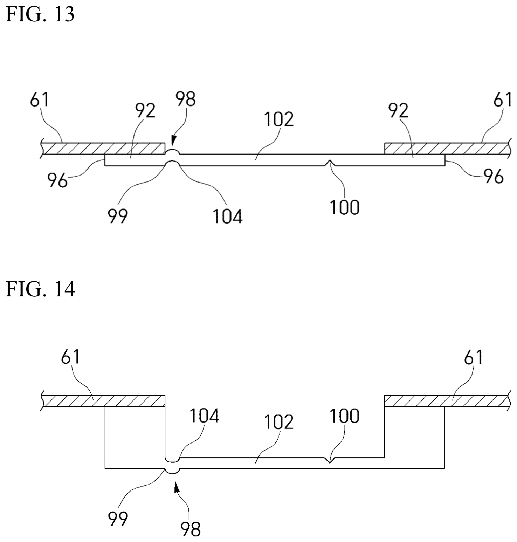

FIGS. 13 and 14 illustrate modified embodiments of FIG. 7.

For example, referring to FIG. 7, the outline 96 of the bonding portion 92 may be at (e.g., may extend to) a higher level than a surface of the vent plate 90, so that the vent plate 90 is lowered farther than the cap plate 61 (e.g., the bonding portion 92 may define a step or a predetermined distance between the top of the vent plate 90 and the bottom of the cap plate 61). In another example, referring to FIG. 13, the outline 96 of the bonding portion may be coplanar with the vent plate 90 so that, after assembly with the cap plate 61, the vent plate 90 may be located directly below a thickness of the cap plate 61. For example, referring to FIG. 13, the bonding portion 92 may be coplanar and coextensive with the vent plate 90, so the top of the vent plate 90 may be coplanar with the bottom of the cap plate 61. According to a structure of a battery, an outer shape may be selected from an outer shape of the bonding portion of FIG. 7 and an outer shape of the bonding portion of FIG. 13.

For example, referring to FIG. 7, the groove of the non-notched portion 98 and the notched portion 100 may be formed on a lower surface of the vent plate 90. In another example, referring to FIG. 14, the groove of the non-notched portion 98 and the notched portion 100 may be formed on an upper surface of the vent plate 90. Since there is a difference in the cutting characteristics of the notched portion 100 and the rotation axis function characteristics of the non-notched portion 98 in the cases of FIGS. 7 and 14, the notched portion 100 and the non-notched portion 98 may be appropriately and optionally applied according to the characteristics of a battery. In FIGS. 7 and 14, the groove of the non-notched portion 98 and the notched portion 100 are formed on the same surface of the vent plate 90, but the non-notched portion 98 and the notched portion 100 may also be formed on different surfaces of the vent plate 90.

Hereinafter, a method of manufacturing a secondary battery including the above-described degassing device will be described. The method of manufacturing a secondary battery according to some embodiments of the present disclosure may include forming the gas discharge hole 65 in one of a case and a cap plate, manufacturing the degassing device 66 configured to discharge gas inside the case when an event occurs, and bonding the degassing device 66 to the gas discharge hole 65, wherein manufacturing of the degassing device 66 may include forming the vent plate 90, which is exposed toward the outside of the case through the gas discharge hole 65, and the bonding portion 92 around the vent plate 90, providing the notched portion 100 defining an outer cutting line of an open portion through which the vent plate 90 is partially opened when the event occurs, and providing the non-notched portion 98 such that the open portion cut and opened along the cutting line when the event occurs is not separated from the vent plate 90.

In some embodiments, providing the non-notched portion 98 may include forming the first point 99 connected to the bonding portion 92 and the second point 104 located at a side opposite to the bonding portion 92 to be spaced apart from the first point 99, and providing the notched portion may include forming a notch connected to the second point 104 of the non-notched portion 98.

In some embodiments, providing the notched portion 100 may include varying the outer cutting line of the open portion 102 to be defined by the notched portion 100 within an area of the vent plate 90.

In some embodiments, providing the non-notched portion 98 may include forming a groove in a surface of the vent plate 90.

In some embodiments, providing the non-notched portion 98 may include forming the groove to have a depth that is less than a notch depth of the notched portion 100.

In some embodiments, providing the non-notched portion 98 may further include forming a protrusion on a surface of the vent plate 90 opposite to a surface thereof in which the groove is formed.

In some embodiments, providing the notched portion 100 may include defining the outer cutting line of the open portion including at least one of a straight line and a curve.

In some embodiments, providing the notched portion 100 may further include defining the outer cutting line of the open portion including a diagonal line.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, or a combination thereof.

As an example, a compound represented by any one of the following formulas may be used: LiₐA_{1-b}X_{b}O_{2-c}D'_{c} (0.90≤a≤1.8, 0≤b≤0.5, 0≤c≤0.05); LiₐMn_{2-b}X_{b}O_{4-c}D'_{c} (0.90≤a≤1.8, 0≤b≤0.5, 0≤c≤0.05); LiₐNi_{1-b-c}Co_{b}X_{c}O_{2-α}D'_{α} (0.90≤a≤1.8, 0≤b≤0.5, 0≤c≤0.5, 0<α<2); LiₐNi_{1-b-c}Mn_{b}X_{c}O_{2-α}D'_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A may be Ni, Co, Mn, or a combination thereof; X may be Al, Ni, Co, Mn, Cr, Fe, Mg, Sr, V, a rare earth element, or a combination thereof; D' may be O, F, S, P, or a combination thereof; G may be Al, Cr, Mn, Fe, Mg, La, Ce, Sr, V, or a combination thereof; and L¹ may be Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material may be in a range of about 90 wt% to about 99 wt% on the basis of 100 wt% of the positive electrode active material layer, and the content of the binder and the conductive material may be in a range of about 0.5 wt% to about 5 wt%, respectively, on the basis of 100 wt% of the positive electrode active material layer.

The substrate may be aluminum (Al).

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si negative electrode active material or a Sn negative electrode active material may be used as the material capable of being doped and undoped with lithium. The Si negative electrode active material may be silicon, a silicon-carbon composite, SiOₓ (0<x≤2), a Si alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate, an ester, an ether, a ketone, an alcohol solvent, an aprotic solvent, and may be used alone or in combination of two or more.

In addition, when a carbonate solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

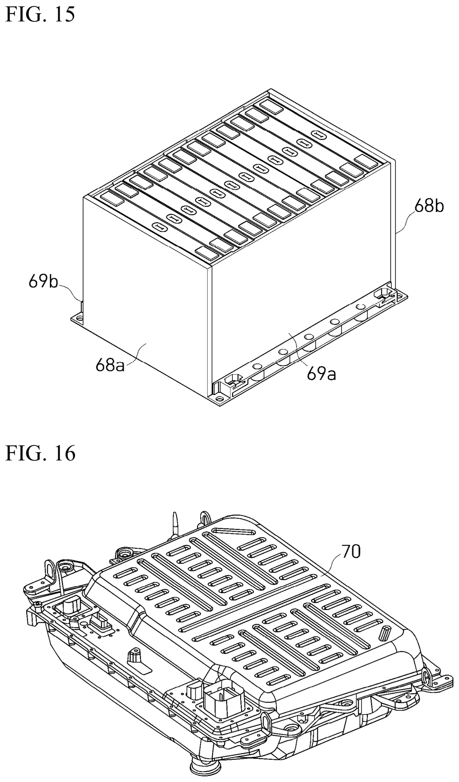

FIG. 15 is a perspective view of a secondary battery module in which secondary batteries are arranged according to embodiments of the present disclosure. With the increase in secondary battery capacity for driving electric vehicles or the like, a secondary battery module may be manufactured by arranging a plurality of secondary battery cells transversely and/or longitudinally and connecting them together. The plurality of secondary batteries may be arranged in a space defined by a pair of facing end plates 68a and 68b and a pair of facing side plates 69a and 69b. The secondary batteries may be arranged in an arrangement (direction) and number to obtain desired voltage and current specifications.

FIG. 16 is a perspective view of a battery pack 70 according to embodiments of the present disclosure. Referring to FIG. 16, the battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown. The battery pack 70 may be mounted on (or in) a vehicle. The vehicle may be, for example, an electric vehicle, a hybrid vehicle, or a plug-in hybrid vehicle. The vehicle may be, e.g., a four-wheeled vehicle or a two-wheeled vehicle.

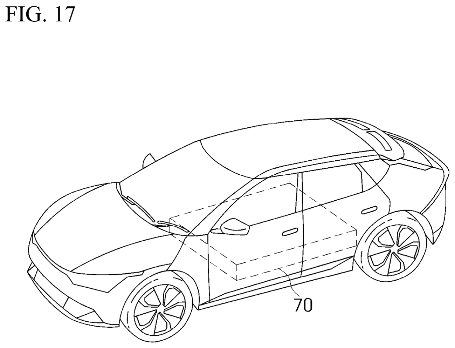

FIG. 17 shows a vehicle that includes the battery pack 70 shown in FIG. 16 on the lower body thereof. Referring to FIG. 17, the vehicle may operate by (e.g., may be powered by) receiving power from the battery pack 70.

By way of summation and review, the present disclosure is directed to improving a degassing device to control an amount and direction of discharge of gas generated inside a battery, thereby enabling effective degassing. That is, according to the present disclosure, the degassing device may include a vent plate having an open area with a shape and an area defined by a notched portion, and a non-notched portion having a length variously designed within an area of the vent plate, thereby obtaining an appropriate venting effect according to the characteristics of a battery. In addition, the shape of an open portion defined by a notched portion may be variously designed, and thus a degassing direction can be controlled to be a desired direction. Further, a notched portion may include a straight line, and thus, the processability or workability during a manufacturing of a degassing device can be improved.

Aspects and features of the present disclosure are not limited to those described above, and other aspects and features not specifically mentioned herein will be clearly understood by those skilled in the art from the description of the present disclosure above.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
a case (72, 140) in which an electrode assembly (30, 40, 74) is accommodated;
a cap plate (61) bonded to the case (72, 140); and
a degassing device (66) in one of the case (72, 140) and the cap plate (61), the degassing device (66) including:
a vent (88) plate exposed toward an outside of the case (72, 140),
a bonding portion (92) around the vent (88) plate and bonded to one of the case (72, 140) and the cap plate (61),
a notched portion (100) in the vent (88) plate, the notched portion (100) including a notch (100a) defining an outer cutting line of an open portion (102) through the vent (88) plate, and the open portion (102) being partially openable when an event occurs, and
a non-notched portion (98) on the vent (88) plate, the non-notched portion (98) not including a notch (100a) and connecting the open portion (102), when partially open, to the vent (88) plate.

2. The secondary battery as claimed in claim 1, wherein:
the non-notched portion (98) includes a first point (99) connected to the bonding portion (92) and a second point (104) located at a side opposite to the bonding portion (92) to be spaced a preset distance apart from the first point, and
the notched portion (100) is connected to the second point (104) of the non-notched portion (98).

3. The secondary battery as claimed in claim 2, wherein a distance between the first point (99) and the second point (104) of the non-notched portion (98) is 10% or less of a width of the vent (88) plate.

4. The secondary battery as claimed in claims 1 to 3, wherein the outer cutting line of the open portion (102) is variably defined by the notched portion (100) within an area of the vent (88) plate.

5. The secondary battery as claimed in claims 1 to 4, wherein the non-notched portion (98) includes a groove (98a) in a surface of the vent (88) plate.

6. The secondary battery as claimed in claim 5, wherein the groove (98a) of the non-notched portion (98) has a depth that is less than a depth of the notch (100a) of the notched portion (100).

7. The secondary battery as claimed in claim 5 or 6, wherein the non-notched portion (98) further includes a protrusion (98b) on a surface of the vent (88) plate, the protrusion (98b) and the groove (98a) being on opposite surface of the vent (88) plate.

8. The secondary battery as claimed in claims 1 to 7, wherein the notched portion (100) includes at least one of a straight line and a curve.

9. The secondary battery as claimed in claim 8, wherein the notched portion (100) further includes a diagonal line.

10. A method of manufacturing a secondary battery, the method comprising:
forming a gas discharge hole (86) in one of a case (72, 140) and a cap plate (61);
manufacturing a degassing device (66) configured to discharge gas inside the case (72, 140) when an event occurs; and
bonding the degassing device (66) to the gas discharge hole (86),
wherein manufacturing the degassing device (66) includes:
forming a vent (88) plate in the gas discharge hole (86), such that the vent (88) plate is exposed to an outside of the case (72, 140) through the gas discharge hole (86), and a bonding portion (92) around the vent (88) plate,
providing a notched portion (100) defining an outer cutting line of an open portion (102) through which the vent (88) plate is partially opened when the event occurs, and
providing a non-notched portion (98), such that when the open portion (102) is cut and opened along the outer cutting line when the event occurs, the non-notched portion (98) is not separated from the vent (88) plate.

11. The method as claimed in claim 10, wherein:
providing the non-notched portion (98) includes forming a first point (99) connected to the bonding portion (92) and a second point (104) located at a side opposite to the bonding portion (92) to be spaced apart from the first point, and
providing the notched portion (100) includes forming a notch (100a) connected to the second point (104) of the non-notched portion (98).

12. The method as claimed in claim 10 or 11, wherein providing the notched portion (100) includes variably defining the outer cutting line of the open portion (102) by the notched portion (100) within an area of the vent (88) plate.

13. The method as claimed in claims 10 to 12, wherein providing the non-notched portion (98) includes forming a groove (98a) in a surface of the vent (88) plate.

14. The method as claimed in claim 13, wherein providing the non-notched portion (98) further includes forming a protrusion (98b) on a surface of the vent (88) plate opposite to a surface in which the groove (98a) is formed.

15. The method as claimed in claims 10 to 14, wherein providing the non-notched portion (98) includes defining the outer cutting line of the open portion (102) with at least one of a straight line and a curve.
